(19) Europäisches Patentamt / European Patent Office / Office européen des brevets

(11) **EP 4 683 276 A1**

(12) **EUROPEAN PATENT APPLICATION**
published in accordance with Art. 153(4) EPC

(43) Date of publication:
**21.01.2026 Bulletin 2026/04**

(21) Application number: **24777406.0**

(22) Date of filing: **05.01.2024**

(51) International Patent Classification (IPC):
***H04L 27/26*** *(2006.01)*

(52) Cooperative Patent Classification (CPC):
**H04L 27/26**

(86) International application number:
**PCT/CN2024/070810**

(87) International publication number:
**WO 2024/198610 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2023 CN 202310369456**

(71) Applicant: **ZTE Corporation**
**Shenzhen 518057 (CN)**

(72) Inventors:
• **HUA, Jian**
  **Shenzhen, Guangdong 518057 (CN)**
• **XIN, Yu**
  **Shenzhen, Guangdong 518057 (CN)**
• **BAO, Tong**
  **Shenzhen, Guangdong 518057 (CN)**

(74) Representative: **Canzler & Bergmeier**
**Patentanwälte**
**Partnerschaft mbB**
**Despag-Straße 6**
**85055 Ingolstadt (DE)**

(54) **DATA TRANSMISSION METHOD, ELECTRONIC DEVICE, AND COMPUTER-READABLE MEDIUM**

(57) The present application provides a data transmission method, an electronic device, and a computer-readable medium. The data transmission method comprises: performing an orthogonal spreading code transform on data included in an edge group of first sequences in N groups of first sequences obtained by dividing a first data sequence to be transmitted, to obtain N groups of second sequences, wherein N is an integer greater than or equal to 2; performing a first Fourier transform on the N groups of second sequences to obtain N groups of third sequences; performing a second Fourier transform on the N groups of third sequences to obtain a second data sequence; and transmitting the second data sequence.

perform orthogonal spreading code transformation on data included in an edge group of first sequences among N groups of first sequences obtained by dividing a first data sequence to be transmitted, to obtain N groups of second sequences, with N being an integer greater than or equal to 2 — 100

perform a first inverse Fourier transform on the N groups of second sequences to obtain N groups of third sequences — 101

perform a second inverse Fourier transform on the N groups of third sequences to obtain a second data sequence — 102

transmit the second data sequence — 103

FIG. 1

**Description**

TECHNICAL FIELD

Embodiments of the present disclosure relate to the technology field of communications, and in particular, to a data transmission method, an electronic device, and a computer-readable medium.

BACKGROUND

The Long Term Evolution (LTE) technology is the wireless cellular communication technology of the 4th Generation mobile communication technology (4G). The LTE technology adopts the Orthogonal Frequency Division Multiplexing (OFDM) technology, and time-frequency resources formed by subcarriers and OFDM symbols serve as wireless physical time-frequency resources for an LTE system. At present, the OFDM technology has been widely applied to wireless communication. By adopting Cyclic Prefixes (CPs), a CP-OFDM system can solve a multipath delay problem well, and divide a frequency selective channel into a group of parallel flat channels, which simplifies a channel estimation method well, and facilitates to achieve a relatively high accuracy of channel estimation. However, the performance of the CP-OFDM system is sensitive to frequency offset and time offset between adjacent subbands because inter-subband interference can be easily caused due to a relatively large spectrum leakage of the system. At present, the LTE system uses guard intervals in frequency domain, but the use of the guard intervals causes a reduction of spectrum efficiency.

The 5th Generation New Radio (5G NR) communication technology still adopts CP-OFDM as a basic waveform, and different parameter values such as a subcarrier spacing can be adopted by two adjacent subbands, which may harm orthogonality between subcarriers and cause a new problem of interference.

SUMMARY

Embodiments of the present disclosure provide a data transmission method, an electronic device, and a computer-readable medium.

In a first aspect, an embodiment of the present disclosure provides a data transmission method, including: performing orthogonal spreading code transformation on data included in an edge group of first sequence among N groups of first sequences obtained by dividing a first data sequence to be transmitted, to obtain N groups of second sequences, N being an integer greater than or equal to 2; performing a first inverse Fourier transform on the N groups of second sequences to obtain N groups of third sequences; performing a second inverse Fourier transform on the N groups of third sequences to obtain a second data sequence; and transmitting the second data sequence.

In a second aspect, an embodiment of the present disclosure provides an electronic device, including: at least one processor; and a storage device having stored thereon at least one program which, when executed by the at least one processor, implements the data transmission method described above.

In a third aspect, an embodiment of the present disclosure provides a computer-readable medium having stored thereon a computer program which, when executed by a processor, implements the data transmission method described above.

With the data transmission method provided in the embodiment of the present disclosure, orthogonal spreading code transformation is performed on the data included in the edge group of first sequence. Since performing orthogonal spreading code transformation on data does not change a bandwidth occupied by the data, without changing the bandwidth occupied by the first data sequence to be transmitted, interference between the edge group of first sequence and other data is reduced, out-of-band leakage is reduced, and spectrum efficiency is improved.

BRIEF DESCRIPTION OF DRAWINGS

FIG. 1 is a flowchart illustrating a data transmission method according to an embodiment of the present disclosure;
FIG. 2 is a schematic diagram illustrating a process of processing a first data sequence into a second data sequence according to Example 1 of the present disclosure;
FIG. 3 is a schematic diagram illustrating a process of processing a first data sequence into a second data sequence according to Example 2 of the present disclosure;
FIG. 4 is a schematic diagram illustrating a process of processing a first data sequence into a second data sequence according to Example 3 of the present disclosure;
FIG. 5 is a schematic diagram illustrating a process of processing a first data sequence into a second data sequence according to Example 4 of the present disclosure;

FIG. 6 is a schematic diagram illustrating a process of processing a first data sequence into a second data sequence according to Example 5 of the present disclosure;

FIG. 7 is a schematic diagram illustrating a process of processing a first data sequence into a second data sequence according to Example 6 of the present disclosure;

FIG. 8 is a schematic diagram illustrating a process of processing a first data sequence into a second data sequence according to Example 7 of the present disclosure; and

FIG. 9 is a block diagram of an electronic device according to an embodiment of the present disclosure.

DETAIL DESCRIPTION OF EMBODIMENTS

In order to enable those of ordinary skill in the art to better understand the technical solutions of the present disclosure, a data transmission method, an electronic device, and a computer-readable medium provided in the present disclosure are described in detail below with reference to the drawings.

Exemplary embodiments will be described more fully below with reference to the drawings, but the exemplary embodiments described herein may be embodied in different forms and should not be interpreted as being limited to the embodiments described herein. Rather, the embodiments are provided to make the present disclosure thorough and complete, and may enable those of ordinary skill in the art to fully understand the scope of the present disclosure.

The embodiments described herein and the features therein may be combined with one another if no conflict is incurred.

The term "and/or" used herein includes any combination and all combinations of at least one associated listed item.

The terms used herein are merely used to describe specific embodiments, and are not intended to limit the present disclosure. As used herein, "a" and "the" which indicate a singular form are intended to include a plural form, unless expressly stated in the context. It should be further understood that the term "include" and/or the term "be made of" used herein indicates the presence of the described features, integers, operations, elements and/or components, but do not exclude the presence or addition of at least one other feature, integer, operation, element, component and/or combinations thereof.

Unless otherwise defined, all terms (including technical terms and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

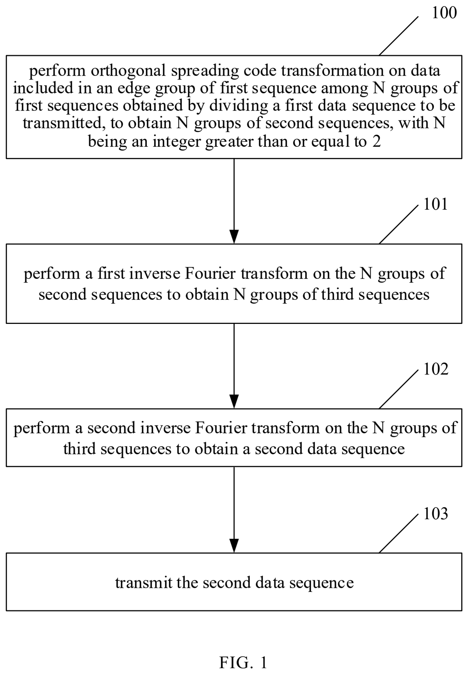

FIG. 1 is a flowchart illustrating a data transmission method according to an embodiment of the present disclosure.

In a first aspect, with reference to FIG. 1, an embodiment of the present disclosure provides a data transmission method, including: operation 100, performing orthogonal spreading code transformation on data included in an edge group of first sequence among N groups of first sequences obtained by dividing a first data sequence to be transmitted, to obtain N groups of second sequences, with N being an integer greater than or equal to 2.

In some exemplary implementations, the first data sequence to be transmitted includes constellation-modulated data and R pieces of reference signal data, and R is an integer greater than or equal to 0.

In some exemplary implementations, the first data sequence to be transmitted is part or all of data to be transmitted within a channel bandwidth.

In some exemplary implementations, the N groups of first sequences correspond to N time-frequency resource blocks.

In some exemplary implementations, the N groups of first sequences correspond to N subbands.

In some exemplary implementations, the N time-frequency resource blocks are part or all of time-frequency resource blocks within the channel bandwidth.

In some exemplary implementations, each of the N time-frequency resource blocks corresponds to one subband.

In some exemplary implementations, an $n^{th}$ group of first sequence corresponds to an $n^{th}$ time-frequency resource block; and n is an integer greater than or equal to 1 and less than or equal to N.

In some exemplary implementations, the $n^{th}$ time-frequency resource block corresponding to the $n^{th}$ group of first sequence refers to that data included in the $n^{th}$ group of first sequence is to be transmitted on the $n^{th}$ time-frequency resource block.

In some exemplary implementations, a total number of pieces of data included in each edge group of first sequence is less than K; and K is an integer greater than or equal to 1.

In some exemplary implementations, the edge group of first sequence includes: a first group of first sequence; or an $N^{th}$ group of first sequence; or the first group of first sequence and the $N^{th}$ group of first sequence.

In some exemplary implementations, a total number of pieces of data included in each non-edge group of first sequence is K.

In some exemplary implementations, non-edge groups of first sequences include: a second group of first sequence to the $N^{th}$ group of first sequence; or the first group of first sequence to an $(N-1)^{th}$ group of first sequence; or the second group of first sequence to the $(N-1)^{th}$ group of first sequence.

For example, in a case where the edge group of first sequence is the first group of first sequence, the non-edge groups of first sequences include: the second group of first sequence to the $N^{th}$ group of first sequence; in a case where the edge group of first sequence is the $N^{th}$ group of first sequence, the non-edge groups of first sequences include: the first group of first sequence to the $(N-1)^{th}$ group of first sequence; and in a case where the edge group of first sequence includes the first group of first sequence and the $N^{th}$ group of first sequence, the non-edge groups of first sequences include: the second group of first sequence to the $(N-1)^{th}$ group of first sequence.

In some exemplary implementations, K is 2 to the power i; and i is an integer greater than or equal to 1.

In some exemplary implementations, the second sequence corresponding to each non-edge group of first sequence is the same as the first sequence.

In some exemplary implementations, a total number of pieces of data included in the second sequence corresponding to each edge group of first sequence is K.

In some exemplary implementations, the second sequence corresponding to each edge group of first sequence refers to a second sequence obtained by performing orthogonal spreading code transformation on the data included in the edge group of first sequence.

In some exemplary implementations, a total number of subcarriers included in the subband corresponding to each edge group of first sequence is the same as a total number of subcarriers included in the subband corresponding to each non-edge group of first sequence.

In some exemplary implementations, a total number of subcarriers included in the time-frequency resource block corresponding to each edge group of first sequence is the same as a total number of subcarriers included in the time-frequency resource block corresponding to each non-edge group of first sequence.

In some exemplary implementations, performing orthogonal spreading code transformation on the data included in the edge group of first sequence among the N groups of first sequences obtained by dividing the first data sequence to be transmitted to obtain the N groups of second sequences includes: performing orthogonal spreading code transformation on data to be transformed in the data included in the edge group of first sequence to obtain the second sequence, with the data to be transmitted being fore part data in the data included in the edge group of first sequence, or rear part data in the data included in the edge group of first sequence, or all the data included in the edge group of first sequence.

In some exemplary implementations, in a case where the edge group of first sequence is the first group of first sequence, the data to be transmitted is the fore part data or all the data; and in a case where the edge group of first sequence is the $N^{th}$ group of first sequence, the data to be transmitted is the rear part data or all the data.

In some exemplary implementations, the fore part data is first h1 pieces of data in the data included in the edge group of first sequence, and the rear part data is last h2 pieces of data in the data included in the edge group of first sequence; and h1 and h2 are integers greater than or equal to 1 and less than or equal to the total number of pieces of the data included in the edge group of first sequence.

In some exemplary implementations, the data to be transmitted does not include the reference signal data.

In some exemplary implementations, in a case where the data to be transmitted includes the reference signal data, the reference signal data in the data to be transmitted is placed to other positions to keep the data to be transmitted not to include the reference signal data.

In some exemplary implementations, the data to be transmitted includes h pieces of data, and data obtained by performing orthogonal spreading code transformation on the data to be transmitted includes hq/p pieces of data; and h is an integer greater than or equal to 1, p is a total number of groups of first spreading sequences used for the orthogonal spreading code transformation, and q is a length of the first spreading sequence.

In some exemplary implementations, q is an even number, every two consecutive pieces of data in each first spreading sequence are in one group, and a phase difference between the two pieces of data in the group is $\pi$; or a phase difference between adjacent groups is $\pi$.

In some exemplary implementations, performing orthogonal spreading code transformation on the data to be transmitted in the data included in the edge group of first sequence to obtain the second sequence includes: expanding p groups of fourth sequences obtained by dividing the data to be transmitted into p groups of fifth sequences with a length of hq/p, with p being the number of groups of first spreading sequences for the orthogonal spreading code transformation, and q being the length of the first spreading sequence; expanding p groups of first spreading sequences each with the length of q into p groups of second spreading sequences each with a length of hq/p; multiplying data in a $k^{th}$ group of fifth sequence and corresponding data in a $k^{th}$ group of second spreading sequence to obtain a $k^{th}$ group of sixth sequence, with k being an integer greater than or equal to 1 and less than or equal to p; weighting and adding p groups of sixth sequences to obtain a seventh sequence; and splicing the seventh sequence and other data included in the edge group of first sequence except the data to be transmitted to obtain the second sequence.

In some exemplary implementations, performing orthogonal spreading code transformation on the data to be transmitted in the data included in the edge group of first sequence to obtain the second sequence includes: respectively multiplying each piece of data in a $k^{th}$ group of fourth sequence among p groups of fourth sequences obtained by dividing the data to be transmitted and each piece of data in a $k^{th}$ group of first spreading sequence among p groups of first spreading sequences each with the length of q to obtain a $k^{th}$ group of sixth sequence, with k being an integer greater than or equal to 1 and less than or equal to p; weighting and adding p groups of sixth sequences to obtain a seventh sequence; and splicing the seventh sequence and other data included in the edge group of first sequence except the data to be transmitted to obtain the second sequence.

In some exemplary implementations, the first spreading sequences are orthogonal spreading codes.

In some exemplary implementations, p is any one of 1, 2 or 3, and q is 4.

In some exemplary implementations, in a case where p is 3 and q is 4, the p groups of first spreading sequences are S1=[C, -C, -C, C], S2=[C, -C, C, -C], and S3=[C, C, -C, -C]; and C is an integer greater than or equal to 1.

In some exemplary implementations, C is 1.

In some exemplary implementations, the data to be transmitted is divided into the p groups of fourth sequences, each group of fourth sequence includes h/p pieces of data, and h/p is an integer.

In some exemplary implementations, expanding the p groups of fourth sequences obtained by dividing the data to be transmitted into the p groups of fifth sequences each with the length of hq/p includes: for each group of fourth sequence, repeating each piece of data in the fourth sequence for q times, and splicing data obtained by the q times of repeating to obtain a corresponding fifth sequence with the length of hq/p. For example, a certain group of fourth sequence is [a1, a2, a3, a4] and q is 4, then the fifth sequence corresponding to the group of fourth sequence is [a1, a1, a1, a1, a2, a2, a2, a2, a3, a3, a3, a3, a4, a4, a4, a4].

In some exemplary implementations, expanding the p groups of first spreading sequences each with the length of q into the p groups of second spreading sequences each with the length of hq/p includes: for each group of first spreading sequence, repeating all data in the first spreading sequence for h/p times to obtain the second spreading sequence. For example, a certain group of first spreading sequence is [C, -C, -C, C] and h/p is 4, then the second spreading sequence is [C, -C, -C, C, C, -C, -C, C, C, -C, -C, C, C, -C, -C, C].

In some exemplary implementations, multiplying the data in the $k^{th}$ group of fifth sequence and the corresponding data in the $k^{th}$ group of second spreading sequence to obtain the $k^{th}$ group of sixth sequence refers to multiplying the data in the $k^{th}$ group of fifth sequence and the data in the $k^{th}$ group of second spreading sequence which has a location index the same as a location index of the data in the $k^{th}$ group of fifth sequence, so as to obtain the $k^{th}$ group of sixth sequence. For example, a first piece of data in the $k^{th}$ group of fifth sequence and a first piece of data in the second spreading sequence are multiplied to obtain a first piece of data in the $k^{th}$ group of sixth sequence, a second piece of data in the $k^{th}$ group of fifth sequence and a second piece of data in the second spreading sequence are multiplied to obtain a second piece of data in the $k^{th}$ group of sixth sequence, and so on.

In some exemplary implementations, respectively multiplying each piece of data in the $k^{th}$ group of fourth sequence among the p groups of fourth sequences obtained by dividing the data to be transmitted and each piece of data in the $k^{th}$ group of first spreading sequence among the p groups of first spreading sequences each with the length of q to obtain the $k^{th}$ group of sixth sequence refers to that a first piece of data in the $k^{th}$ group of fourth sequence and a first piece of data in the $k^{th}$ group of first spreading sequence are multiplied to obtain a first piece of data in the $k^{th}$ group of sixth sequence, the first piece of data in the $k^{th}$ group of fourth sequence and a second piece of data in the $k^{th}$ group of first spreading sequence are multiplied to obtain a second piece of data in the $k^{th}$ group of sixth sequence, and so on, until the first piece of data in the $k^{th}$ group of fourth sequence and a $q^{th}$ piece of data in the $k^{th}$ group of first spreading sequence are multiplied to obtain a $q^{th}$ piece of data in the $k^{th}$ group of sixth sequence; a second piece of data in the $k^{th}$ group of fourth sequence and the first piece of data in the $k^{th}$ group of first spreading sequence are multiplied to obtain a $(q+1)^{th}$ piece of data in the $k^{th}$ group of sixth sequence, the second piece of data in the $k^{th}$ group of fourth sequence and the second piece of data in the $k^{th}$ group of first spreading sequence are multiplied to obtain a $(q+2)^{th}$ piece of data in the $k^{th}$ group of sixth sequence, and so on, until the second piece of data in the $k^{th}$ group of fourth sequence and the $q^{th}$ piece of data in the $k^{th}$ group of first spreading sequence are multiplied to obtain a $(2q)^{th}$ piece of data in the $k^{th}$ group of sixth sequence; and so on, until a $(h/q)^{th}$ piece of data in the $k^{th}$ group of fourth sequence and the $q^{th}$ piece of data in the $k^{th}$ group of first spreading sequence are multiplied to obtain a $(hq/p)^{th}$ piece of data in the $k^{th}$ group of sixth sequence, thereby finally obtaining the $k^{th}$ group of sixth sequence.

At operation101, a first inverse Fourier transform is performed on the N groups of second sequences to obtain N groups of third sequences.

In some exemplary implementations, a total number of pieces of data included in an $n^{th}$ group of second sequence is k'(n).

In some exemplary implementations, a total number of pieces of data included in each group of third sequence is the same as the number of the subcarriers included in the time-frequency resource block corresponding to each group of first sequence.

In some exemplary implementations, performing the first inverse Fourier transform on the N groups of second sequences to obtain the N groups of third sequences includes: performing an M-fold oversampling first inverse Fourier transform on the N groups of second sequences to obtain the N groups of third sequences, with M being an integer greater than or equal to 2.

In some exemplary implementations, performing the M-fold oversampling first inverse Fourier transform on the N groups of second sequences to obtain the N groups of third sequences includes: respectively adding $\frac{k'(n)}{2}$ pieces of zero data to two ends of the $n^{th}$ group of second sequence, and performing the first inverse Fourier transform on the $n^{th}$ group of second sequence added with the zero data to obtain an $n^{th}$ group of third sequence, with n being an integer greater than or equal to 1 and less than or equal to N, and k'(n) being a total number of pieces of the data included in the $n^{th}$ group of second sequence.

In some exemplary implementations, a total number of inverse Fourier transform points for the first inverse Fourier transform performed on the $n^{th}$ group of second sequence is the same as a total number of pieces of data included in the $n^{th}$ group of third sequence; and n is an integer greater than or equal to 1 and less than or equal to N.

In some exemplary implementations, the number of inverse Fourier transform points for the first inverse Fourier transform performed on each of the N groups of second sequences is the same.

In some exemplary implementations, a zero-frequency position for the first inverse Fourier transform performed on the $n^{th}$ group of second sequence is within a frequency range of the time-frequency resource block corresponding to the $n^{th}$ group of first sequence; and n is an integer greater than or equal to 1 and less than or equal to N.

In some exemplary implementations, zero-frequency positions for the first inverse Fourier transform performed on different groups of second sequences are different.

In some exemplary implementations, the zero-frequency position for the first inverse Fourier transform performed on the $n^{th}$ group of second sequence is in one of the subcarriers included in the time-frequency resource block corresponding to the $n^{th}$ group of first sequence.

At operation 102, a second inverse Fourier transform is performed on the N groups of third sequences to obtain a second data sequence.

In some exemplary implementations, a total number of inverse Fourier transform points for the second inverse Fourier transform performed on the N groups of third sequences is greater than N.

In some exemplary implementations, performing the second inverse Fourier transform on the N groups of third sequences to obtain the second data sequence includes: performing the second inverse Fourier transform on N pieces of data formed by a $j^{th}$ piece of data from each of the N groups of third sequences to obtain a $j^{th}$ group of ninth sequence, with j being an integer greater than or equal to 1 and less than or equal to B, and B being a total number of pieces of the data included in each group of third sequence; expanding B groups of ninth sequences into B groups of tenth sequences, with a total number of pieces of data included in the tenth sequences being D times a total number of pieces of data included in the ninth sequences, and D being an integer greater than or equal to 2; and splicing the B groups of tenth sequences into the second data sequence.

In some exemplary implementations, after expanding the B groups of ninth sequences into the B groups of tenth sequences and before splicing the B groups of tenth sequences into the second data sequence, the method further includes: performing a windowing operation on the B groups of tenth sequences.

Splicing the B groups of tenth sequences into the second data sequence includes: splicing the B groups of tenth sequences subjected to the windowing operation into the second data sequence.

In some exemplary implementations, performing the windowing operation on the B groups of tenth sequences refers to respectively multiplying each group of tenth sequence and a preset function.

In some exemplary implementations, the preset function is a window function.

In some exemplary implementations, before performing the second inverse Fourier transform on the N groups of third sequences to obtain the second data sequence, the method further includes: respectively multiplying each group of third sequence among the N groups of third sequences and a corresponding coefficient sequence to obtain N groups of eighth sequences.

In some exemplary implementations, the coefficient sequence is:

[exp(2πj/M×(n-1)×0), exp(2πj/M×(n-1)×1), ..., exp(2πj/M×(n-1)×(M×k'(n)-1))], or [exp(2πj/M×(n-1)×0+πj), exp(2πj/M×(n-1)×1+πj), ..., exp(2πj/M×(n-1)×M×k'(n)-1)+πj)].

Performing the second inverse Fourier transform on the N groups of third sequences to obtain the second data sequence includes: performing the second inverse Fourier transform on the N groups of eighth sequences to obtain the second data sequence.

In some exemplary implementations, performing the second inverse Fourier transform on the N groups of third sequences to obtain the second data sequence includes: performing the second inverse Fourier transform on the N groups of third sequences and another data sequence to obtain the second data sequence.

In some exemplary implementations, the another data sequence is a data sequence except the first data sequence.

In some exemplary implementations, the another data sequence is a data sequence obtained by performing a first inverse Fourier transform on a data sequence except the first data sequence.

In some exemplary implementations, the another data sequence is a data sequence obtained by performing orthogonal spreading code transformation on a data sequence except the first data sequence.

In some exemplary implementations, the another data sequence is a data sequence obtained by performing orthogonal spreading code transformation and a first inverse Fourier transform on a data sequence except the first data sequence.

In some exemplary implementations, in a case where the number of pieces of the data included in each of the N groups of third sequences and the number of pieces of data included in the another data sequence are the same, performing the second inverse Fourier transform on the N groups of third sequences and the another data sequence to obtain the second data sequence includes: performing the second inverse Fourier transform on N+1 pieces of data formed by a $j^{th}$ piece of data from each of the N groups of third sequences and a $j^{th}$ piece of data in the another data sequence to obtain a $j^{th}$ group of ninth sequence, with j being an integer greater than or equal to 1 and less than or equal to B, and B being the number of pieces of the data included in each group of third sequence; expanding B groups of ninth sequences into B groups of tenth sequences, with the number of pieces of data included in the tenth sequences being D times the number of pieces of data included in the ninth sequences, and D being an integer greater than or equal to 2; and splicing the B groups of tenth sequences into the second data sequence.

In some exemplary implementations, each group of ninth sequence corresponds to one subsymbol.

In some exemplary implementations, expanding the B groups of ninth sequences into the B groups of tenth sequences includes: repeating a $k1^{th}$ group of ninth sequence for C times to obtain a $k1^{th}$ group of tenth sequence, with k1 being an integer greater than or equal to 1 and less than or equal to B, and C being an integer greater than or equal to 2.

In some exemplary implementations, splicing the B groups of tenth sequences into the second data sequence refers to arranging the B groups of tenth sequences into B rows in a staggered manner, with a staggered interval between a first piece of data in a $(k1+1)^{th}$ row and a first piece of data in a $k1^{th}$ row being equal to half the number of pieces of the data included in each ninth sequence; and adding each column of data from the B rows of data together to obtain the second data sequence.

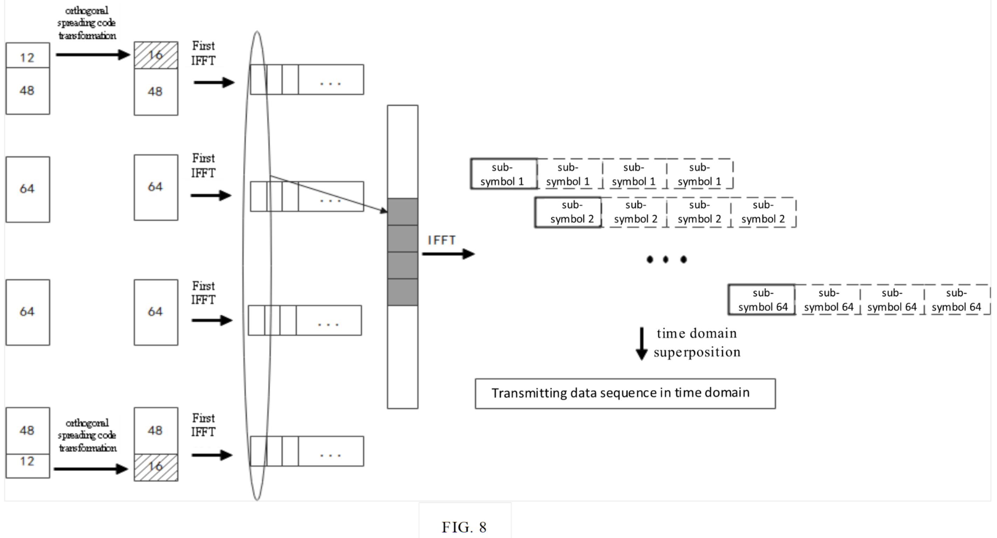

In some exemplary implementations, for arranging the B groups of tenth sequences into the B rows in a staggered manner, the tenth sequence in a $k2^{th}$ row is staggered backward relative to the tenth sequence in a $(k2-1)^{th}$ row, as shown in FIG. 8; and k2 is an integer greater than or equal to 2 and less than or equal to B.

At operation 103, the second data sequence is transmitted.

In some exemplary implementations, the second data sequence is transmitted on N time-frequency resource blocks.

In some exemplary implementations, the second data sequence is transmitted on N subbands.

In some exemplary implementations, after performing the second inverse Fourier transform on the N groups of third sequences to obtain the second data sequence and before transmitting the second data sequence, the method further includes: filtering the second data sequence.

Transmitting the second data sequence includes: transmitting the filtered second data sequence.

In some exemplary implementations, the filtering is single-phase filtering or polyphase filtering.

In some exemplary implementations, a filter function for polyphase filtering includes: a root raised cosine function, a raised cosine function, a rectangular function, and an Isotropic Orthogonal Transform Algorithm (IOTA) function, or the like.

With the data transmission method provided in the embodiment of the present disclosure, orthogonal spreading code transformation is performed on the data included in the edge group of first sequence. Since performing orthogonal spreading code transformation on data does not change a bandwidth occupied by the data, without changing the bandwidth occupied by the first data sequence to be transmitted, interference between the edge group of first sequence and the other data is reduced, out-of-band leakage is reduced, and spectrum efficiency is improved.

In some exemplary implementations, the data to be transmitted does not include the reference signal data, and the reference signal data may be kept on the subcarriers, without being affected by the orthogonal spreading code transformation.

In order to illustrate specific implementation processes of the data transmission method provided in the embodiment of the present disclosure more directly, several examples are listed below for illustration, but the listed examples are not intended to limit the scope of the embodiment of the present disclosure.

Example 1

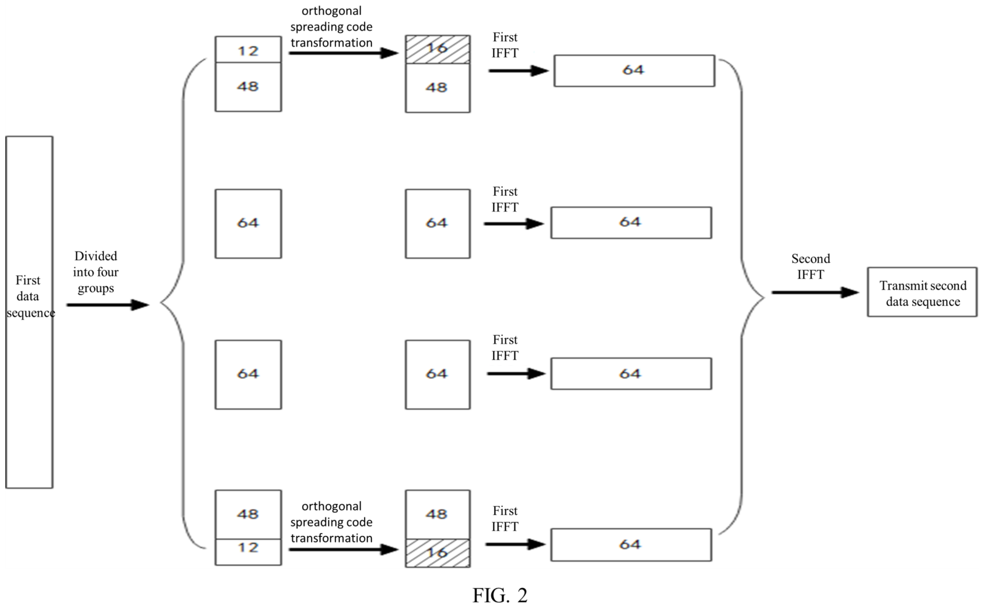

In the present example, the first data sequence to be transmitted is divided into four groups of first sequences, a first group of first sequence includes 60 pieces of data, a second group of first sequence includes 64 pieces of data, a third group of first sequence includes 64 pieces of data, and a fourth group of first sequence includes 60 pieces of data, as shown in FIG. 2.

The data in the first group of first sequence to the fourth group of first sequence is to be transmitted on the time-frequency resource blocks with a subcarrier spacing of 15 kHz.

In order to reduce out-of-band leakage, orthogonal spreading code transformation is respectively performed on first 12 pieces of data in the data included in the first group of first sequence and last 12 pieces of data in the data included in the fourth group of first sequence, and a specific process is as follows.

First spreading sequences satisfying p=3 and q=4 are selected, i.e., the three groups of first spreading sequences are [1, -1, -1, 1], [1, -1, 1, -1], and [1, 1, -1, -1], respectively.

For the first group of first sequence, the first 12 pieces of data are divided into three groups of fourth sequences, a first group of fourth sequence is [a1, a2, a3, a4], a second group of fourth sequence is [b1, b2, b3, b4], and a third group of fourth sequence is [c1, c2, c3, c4].

The pieces of data in the first group of fourth sequence [a1, a2, a3, a4] are respectively multiplied by the first group of first spreading sequence [1, -1, -1, 1], and then are spliced to obtain a first group of sixth sequence, i.e., [a1, -a1, -a1, a1, a2, -a2, - a2, a2, a3, -a3, -a3, a3, a4, -a4, -a4, a4].

The pieces of data in the second group of fourth sequence [b1, b2, b3, b4] are respectively multiplied by the second group of first spreading sequence [1, -1, 1, -1], and then are spliced to obtain a second group of sixth sequence, i.e., [b1, -b1, b1, -b1, b2, -b2, b2, -b2, b3, -b3, b3, -b3, b4, -b4, b4, -b4].

The pieces of data in the third group of fourth sequence [c1, c2, c3, c4] are respectively multiplied by the third group of first spreading sequence [1, 1, -1, -1], and then are spliced to obtain a third group of sixth sequence, i.e., [c1, c1, -c1, -c1, c2, c2, - c2, -c2, c3, c3, -c3, -c3, c4, c4, -c4, -c4].

Weight factors P(1), P(2), and P(3) are configured for the three groups of sixth sequences respectively, and values of P(1), P(2), and P(3) may be flexibly set based on application scenarios, for example, it is selected that P(1)=P(2)=P(3)=1. The three groups of sixth sequences are respectively multiplied by the corresponding weight factors and then added together to obtain a seventh sequence including 16 pieces of data, and the seventh sequence and the remaining 48 pieces of data in the first group of first sequence are spliced to obtain a first group of second sequence including 64 pieces of data.

For the fourth group of first sequence, the first spreading sequences satisfying p=3 and q=4 are also selected, that is, the three groups of first spreading sequences are [1, -1, -1, 1], [1, -1, 1, -1], and [1, 1, -1, -1], respectively.

For the fourth group of first sequence, the last 12 pieces of data are divided into three groups of fourth sequences, a first group of fourth sequence is [d1, d2, d3, d4], a second group of fourth sequence is [e1, e2, e3, e4], and a third group of fourth sequence is [f1, f2, f3, f4].

The pieces of data in the first group of fourth sequence [d1, d2, d3, d4] are respectively multiplied by the first group of first spreading sequence [1, -1, -1, 1], and then are spliced to obtain a first group of sixth sequence, i.e., [d1, -d1, -d1, d1, d2, -d2, - d2, d2, d3, -d3, -d3, d3, d4, -d4, -d4, d4].

The pieces of data in the second group of fourth sequence [e1, e2, e3, e4] are respectively multiplied by the second group of first spreading sequence [1, -1, 1, -1], and then are spliced to obtain a second group of sixth sequence, i.e., [e1, -e1, e1, -e1, e2, -e2, e2, -e2, e3, -e3, e3, -e3, e4, -e4, e4, -e4].

The pieces of data in the third group of fourth sequence [f1, f2, f3, f4] are respectively multiplied by the third group of first spreading sequence [1, 1, -1, -1], and then are spliced to obtain a third group of sixth sequence, i.e., [f1, f1, -f1, -f1, f2, f2, -f2, -f2, f3, f3, -f3, -f3, f4, f4, -f4, -f4].

The weight factors P(1), P(2), and P(3) are configured for the three groups of sixth sequences respectively, and the values of P(1), P(2), and P(3) may be flexibly set based on application scenarios, for example, it is selected that P(1)=P(2)=P(3)=1. The three groups of sixth sequences are respectively multiplied by the corresponding weight factors and then added together to obtain a seventh sequence including 16 pieces of data, and the seventh sequence and the remaining 48 pieces of data in the fourth group of first sequence are spliced to obtain a fourth group of second sequence including 64 pieces of data.

In the present example, the second group of first sequence is the same as a second group of second sequence, and the third group of first sequence is the same as a third group of second sequence.

A first inverse Fourier transform is performed on the first group of second sequence to obtain a first group of third sequence, with the number of inverse Fourier transform points being 64, and the number of pieces of data included in the first group of third sequence is 64.

A first inverse Fourier transform is performed on the second group of second sequence to obtain a second group of third sequence, with the number of inverse Fourier transform points being 64, and the number of pieces of data included in the second group of third sequence is 64.

A first inverse Fourier transform is performed on the third group of second sequence to obtain a third group of third sequence, with the number of inverse Fourier transform points being 64, and the number of pieces of data included in the third group of third sequence is 64.

A first inverse Fourier transform is performed on the fourth group of second sequence to obtain a fourth group of third sequence, with the number of inverse Fourier transform points being 64, and the number of pieces of data included in the fourth group of third sequence is 64.

A second inverse Fourier transform is performed on the four groups of third sequences to obtain a second data sequence.

The second data sequence is transmitted.

Example 2

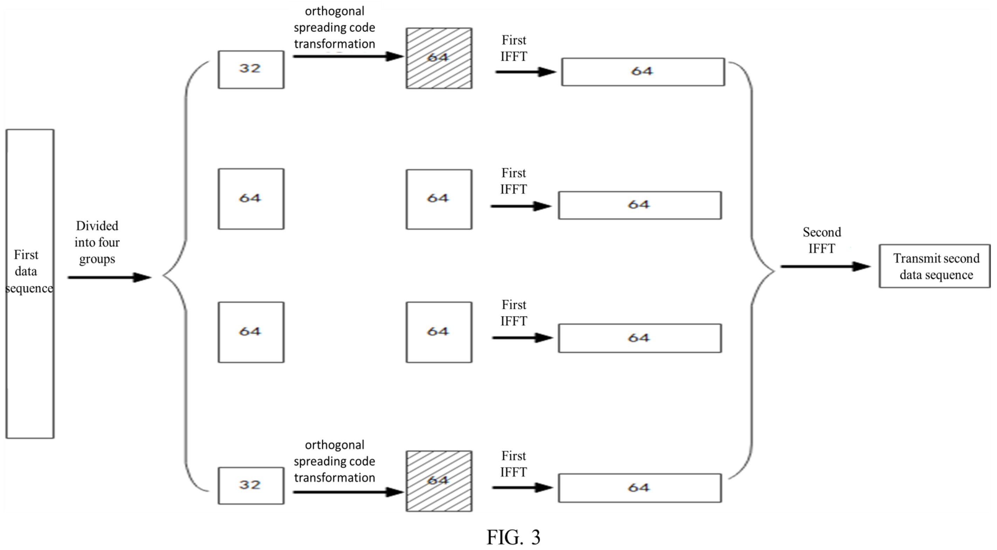

In the present example, the first data sequence to be transmitted is divided into four groups of first sequences, a first group of first sequence includes 32 pieces of data, a second group of first sequence includes 64 pieces of data, a third group of first sequence includes 64 pieces of data, and a fourth group of first sequence includes 32 pieces of data, as shown in FIG. 3.

The data in the first group of first sequence to the fourth group of first sequence is to be transmitted on the time-frequency resource blocks with a subcarrier spacing of 15 kHz.

In order to reduce out-of-band leakage, orthogonal spreading code transformation is respectively performed on all the data included in the first group of first sequence and all the data included in the fourth group of first sequence, and a specific process is as follows.

First spreading sequences satisfying p=2 and q=4 are selected, i.e., the two groups of first spreading sequences are [1, -1, -1, 1] and [1, -1, 1, -1], respectively.

For the first group of first sequence, the 32 pieces of data are divided into two groups of fourth sequences, a first group of fourth sequence is [a1, a2, a3, ..., a16], and a second group of fourth sequence is [b1, b2, b3, ..., b16].

The pieces of data in the first group of fourth sequence [a1, a2, a3, ..., a16] are respectively multiplied by the first group of first spreading sequence [1, -1, -1, 1], and then are spliced to obtain a first group of sixth sequence, i.e., [a1, -a1, -a1, a1, a2, -a2, - a2, a2, a3, -a3, -a3, a3, ..., a16, -a16, -a16, a16].

The pieces of data in the second group of fourth sequence [b1, b2, b3, ..., b16] are respectively multiplied by the second group of first spreading sequence [1, -1, 1, -1], and then are spliced to obtain a second group of sixth sequence, i.e., [b1, -b1, b1, -b1, b2, -b2, b2, -b2, b3, -b3, b3, -b3, ..., b16, -b16, b16, -b16].

Weight factors P(1) and P(2) are configured for the two groups of sixth sequences respectively, and values of P(1) and P(2) may be flexibly set based on application scenarios, for example, it is selected that P(1)=P(2)= 1. The two groups of sixth sequences are respectively multiplied by the corresponding weight factors and then added together to obtain a seventh sequence including 64 pieces of data, and a first group of second sequence includes 64 pieces of data.

For the fourth group of first sequence, the first spreading sequences satisfying p=2 and q=4 are also selected, that is, the two groups of first spreading sequences are [1, -1, - 1, 1] and [1, -1, 1, -1], respectively.

For the fourth group of first sequence, the 32 pieces of data are divided into two groups of fourth sequences, a first group of fourth sequence is [c1, c2, c3, ..., c16], and a second group of fourth sequence is [d1, d2, d3, ..., d16].

The pieces of data in the first group of fourth sequence [c1, c2, c3, ..., c16] are respectively multiplied by the first group of first spreading sequence [1, -1, -1, 1], and then are spliced to obtain a first group of sixth sequence, i.e., [c1, -c1, -c1, c1, c2, -c2, - c2, c2, c3, -c3, -c3, c3, ..., c16, -c16, -c16, c16].

The pieces of data in the second group of fourth sequence [d1, d2, d3, ..., d16] are respectively multiplied by the second group of first spreading sequence [1, -1, 1, -1], and then are spliced to obtain a second group of sixth sequence, i.e., [d1, -d1, d1, -d1, d2, -d2, d2, -d2, d3, -d3, d3, -d3, ..., d16, -d16, d16, -d16].

The weight factors P(1) and P(2) are configured for the two groups of sixth sequences respectively, and the values of P(1) and P(2) may be flexibly set based on application scenarios, for example, it is selected that P(1)=P(2) =1. The two groups of sixth sequences are respectively multiplied by the corresponding weight factors and then added together to obtain a seventh sequence including 64 pieces of data, and a fourth group of second sequence includes 64 pieces of data.

In the present example, the second group of first sequence is the same as a second group of second sequence, and the third group of first sequence is the same as a third group of second sequence.

A first inverse Fourier transform is performed on the first group of second sequence to obtain a first group of third sequence, with the number of inverse Fourier transform points being 64, and the number of pieces of data included in the first group of third sequence is 64.

A first inverse Fourier transform is performed on the second group of second sequence to obtain a second group of third sequence, with the number of inverse Fourier transform points being 64, and the number of pieces of data included in the second group of third sequence is 64.

A first inverse Fourier transform is performed on the third group of second sequence to obtain a third group of third sequence, with the number of inverse Fourier transform points being 64, and the number of pieces of data included in the third group of third sequence is 64.

A first inverse Fourier transform is performed on the fourth group of second sequence to obtain a fourth group of third sequence, with the number of inverse Fourier transform points being 64, and the number of pieces of data included in the fourth group of third sequence is 64.

A second inverse Fourier transform is performed on the four groups of third sequences to obtain a second data sequence.

The second data sequence is transmitted.

Example 3

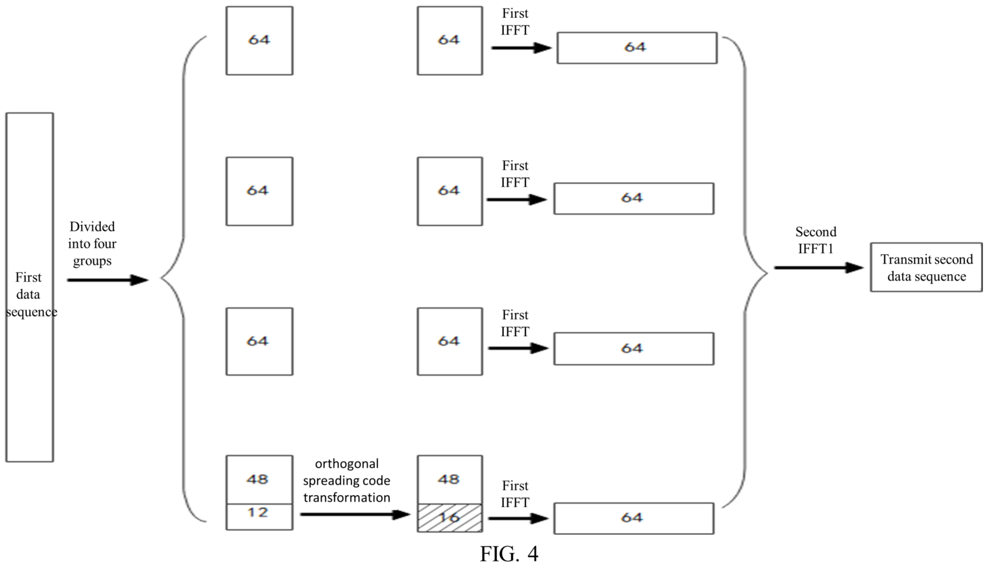

In the present example, the first data sequence to be transmitted is divided into four groups of first sequences, a first group of first sequence includes 64 pieces of data, a second group of first sequence includes 64 pieces of data, a third group of first sequence includes 64 pieces of data, and a fourth group of first sequence includes 60 pieces of data, as shown in FIG. 4.

The data in the first group of first sequence to the fourth group of first sequence is to be transmitted on the time-frequency resource blocks with a subcarrier spacing of 15 kHz.

In order to reduce out-of-band leakage, orthogonal spreading code transformation is performed on the last 12 pieces of data in the data included in the fourth group of first sequence, and a specific process is as follows.

First spreading sequences satisfying p=3 and q=4 are selected, i.e., the three groups of first spreading sequences are [1, -1, -1, 1], [1, -1, 1, -1], and [1, 1, -1, -1], respectively.

For the fourth group of first sequence, the last 12 pieces of data are divided into three groups of fourth sequences, a first group of fourth sequence is [a1, a2, a3, a4], a second group of fourth sequence is [b1, b2, b3, b4], and a third group of fourth sequence is [c1, c2, c3, c4].

The pieces of data in the first group of fourth sequence [a1, a2, a3, a4] are respectively multiplied by the first group of first spreading sequence [1, -1, -1, 1], and then are spliced to obtain a first group of sixth sequence, i.e., [a1, -a1, -a1, a1, a2, -a2, -a2, a2, a3, -a3, -a3, a3, a4, -a4, -a4, a4].

The pieces of data in the second group of fourth sequence [b1, b2, b3, b4] are respectively multiplied by the second group of first spreading sequence [1, -1, 1, -1], and then are spliced to obtain a second group of sixth sequence, i.e., [b1, -b1, b1, -b1, b2, -b2, b2, -b2, b3, -b3, b3, -b3, b4, -b4, b4, -b4].

The pieces of data in the third group of fourth sequence [c1, c2, c3, c4] are respectively multiplied by the third group of first spreading sequence [1, 1, -1, -1], and then are spliced to obtain a third group of sixth sequence, i.e., [c1, c1, -c1, -c1, c2, c2, -c2, -c2, c3, c3, -c3, -c3, c4, c4, -c4, -c4].

Weight factors P(1), P(2), and P(3) are configured for the three groups of sixth sequences respectively, and values of P(1), P(2), and P(3) may be flexibly set based on application scenarios, for example, it is selected that P(1)=P(2)=P(3)=1. The three groups of sixth sequences are respectively multiplied by the corresponding weight factors and then added together to obtain a seventh sequence including 16 pieces of data, and the seventh sequence and the remaining 48 pieces of data in the fourth group of first sequence are spliced to obtain a fourth group of second sequence including 64 pieces of data.

In the present example, the first group of first sequence is the same as a first group of second sequence, the second group of first sequence is the same as a second group of second sequence, and the third group of first sequence is the same as a third group of second sequence.

A first inverse Fourier transform is performed on the first group of second sequence to obtain a first group of third sequence, with the number of inverse Fourier transform points being 64, and the number of pieces of data included in the first group of third sequence is 64.

A first inverse Fourier transform is performed on the second group of second sequence to obtain a second group of third sequence, with the number of inverse Fourier transform points being 64, and the number of pieces of data included in the second group of third sequence is 64.

A first inverse Fourier transform is performed on the third group of second sequence to obtain a third group of third sequence, with the number of inverse Fourier transform points being 64, and the number of pieces of data included in the third group of third sequence is 64.

A first inverse Fourier transform is performed on the fourth group of second sequence to obtain a fourth group of third sequence, with the number of inverse Fourier transform points being 64, and the number of pieces of data included in the fourth group of third sequence is 64.

A second inverse Fourier transform is performed on the four groups of third sequences to obtain a second data sequence.

The second data sequence is transmitted.

Example 4

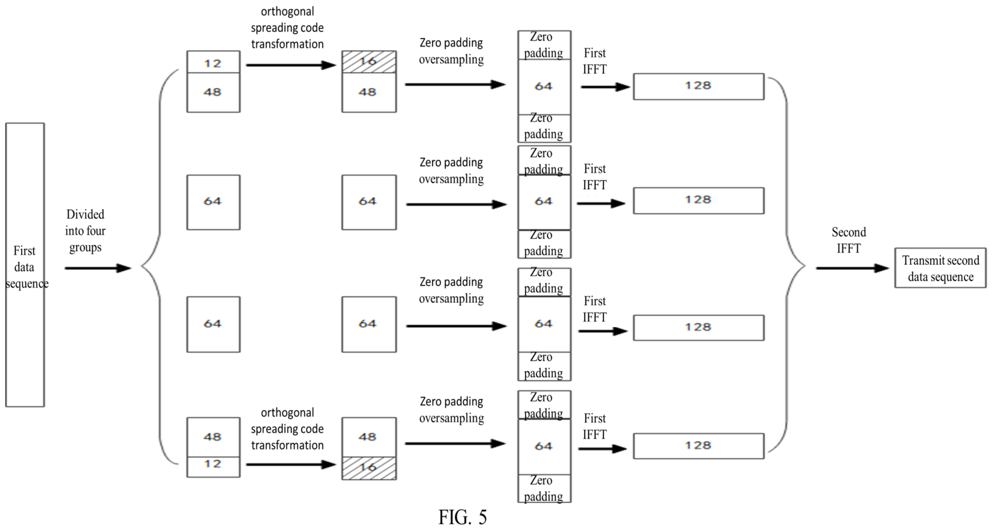

In the present example, the first data sequence to be transmitted is divided into four groups of first sequences, a first group of first sequence includes 60 pieces of data, a second group of first sequence includes 64 pieces of data, a third group of first sequence includes 64 pieces of data, and a fourth group of first sequence includes 60 pieces of data, as shown in FIG. 5.

The data in the first group of first sequence to the fourth group of first sequence is to be transmitted on the time-frequency resource blocks with a subcarrier spacing of 15 kHz.

In order to reduce out-of-band leakage, orthogonal spreading code transformation is respectively performed on the first 12 pieces of data in the data included in the first group of first sequence and the last 12 pieces of data in the data included in the fourth group of first sequence, and a specific process is as follows.

First spreading sequences satisfying p=3 and q=4 are selected, i.e., the three groups of first spreading sequences are [1, -1, -1, 1], [1, -1, 1, -1], and [1, 1, -1, -1], respectively.

For the first group of first sequence, the first 12 pieces of data are divided into three groups of fourth sequences, a first group of fourth sequence is [a1, a2, a3, a4], a second group of fourth sequence is [b1, b2, b3, b4], and a third group of fourth sequence is [c1, c2, c3, c4].

The pieces of data in the first group of fourth sequence [a1, a2, a3, a4] are respectively multiplied by the first group of first spreading sequence [1, -1, -1, 1], and then are spliced to obtain a first group of sixth sequence, i.e., [a1, -a1, -a1, a1, a2, -a2, - a2, a2, a3, -a3, -a3, a3, a4, -a4, -a4, a4].

The pieces of data in the second group of fourth sequence [b1, b2, b3, b4] are respectively multiplied by the second group of first spreading sequence [1, -1, 1, -1], and then are spliced to obtain a second group of sixth sequence, i.e., [b1, -b1, b1, -b1, b2, -b2, b2, -b2, b3, -b3, b3, -b3, b4, -b4, b4, -b4].

The pieces of data in the third group of fourth sequence [c1, c2, c3, c4] are respectively multiplied by the third group of first spreading sequence [1, 1, -1, -1], and then are spliced to obtain a third group of sixth sequence, i.e., [c1, c1, -c1, -c1, c2, c2, - c2, -c2, c3, c3, -c3, -c3, c4, c4, -c4, -c4].

Weight factors P(1), P(2), and P(3) are configured for the three groups of sixth sequences respectively, and values of P(1), P(2), and P(3) may be flexibly set based on application scenarios, for example, it is selected that P(1)=P(2) =P(3)=1. The three groups of sixth sequences are respectively multiplied by the corresponding weight factors and then added together to obtain a seventh sequence including 16 pieces of data, and the seventh sequence and the remaining 48 pieces of data in the first group of first sequence are spliced to obtain a first group of second sequence including 64 pieces of data.

For the fourth group of first sequence, the first spreading sequences satisfying p=3 and q=4 are also selected, that is, the three groups of first spreading sequences are [1, -1, -1, 1], [1, -1, 1, -1], and [1, 1, -1, -1], respectively.

For the fourth group of first sequence, the last 12 pieces of data are divided into three groups of fourth sequences, a first group of fourth sequence is [d1, d2, d3, d4], a second group of fourth sequence is [e1, e2, e3, e4], and a third group of fourth sequence is [f1, f2, f3, f4].

The pieces of data in the first group of fourth sequence [d1, d2, d3, d4] are respectively multiplied by the first group of first spreading sequence [1, -1, -1, 1], and then are spliced to obtain a first group of sixth sequence, i.e., [d1, -d1, -d1, d1, d2, -d2, - d2, d2, d3, -d3, -d3, d3, d4, -d4, -d4, d4].

The pieces of data in the second group of fourth sequence [e1, e2, e3, e4] are respectively multiplied by the second group of first spreading sequence [1, -1, 1, -1], and then are spliced to obtain a second group of sixth sequence, i.e., [e1, -e1, e1, -e1, e2, -e2, e2, -e2, e3, -e3, e3, -e3, e4, -e4, e4, -e4].

The pieces of data in the third group of fourth sequence [f1, f2, f3, f4] are respectively multiplied by the third group of first spreading sequence [1, 1, -1, -1], and then are spliced to obtain a third group of sixth sequence, i.e., [f1, f1, -f1, -f1, f2, f2, -f2, -f2, f3, f3, -f3, -f3, f4, f4, -f4, -f4].

The weight factors P(1), P(2), and P(3) are configured for the three groups of sixth sequences respectively, and the values of P(1), P(2), and P(3) may be flexibly set based on application scenarios, for example, it is selected that P(1) =P(2)=P(3)=1. The three groups of sixth sequences are respectively multiplied by the corresponding weight factors and then added together to obtain a seventh sequence including 16 pieces of data, and the seventh sequence and the remaining 48 pieces of data in the fourth group of first sequence are spliced to obtain a fourth group of second sequence including 64 pieces of data.

In the present example, the second group of first sequence is the same as a second group of second sequence, and the third group of first sequence is the same as a third group of second sequence.

2-fold oversampling first inverse Fourier transform is performed on the first group of second sequence to obtain a first group of third sequence, with the number of inverse Fourier transform points being 128, and the number of pieces of data included in the first group of third sequence is 128.

2-fold oversampling first inverse Fourier transform is performed on the second group of second sequence to obtain a second group of third sequence, with the number of inverse Fourier transform points being 128, and the number of pieces of data included in the second group of third sequence is 128.

2-fold oversampling first inverse Fourier transform is performed on the third group of second sequence to obtain a third group of third sequence, with the number of inverse Fourier transform points being 128, and the number of pieces of data included in the third group of third sequence is 128.

2-fold oversampling first inverse Fourier transform is performed on the fourth group of second sequence to obtain a fourth group of third sequence, with the number of inverse Fourier transform points being 128, and the number of pieces of data included in the fourth group of third sequence is 128.

A second inverse Fourier transform is performed on the four groups of third sequences to obtain a second data sequence.

The second data sequence is transmitted.

Example 5

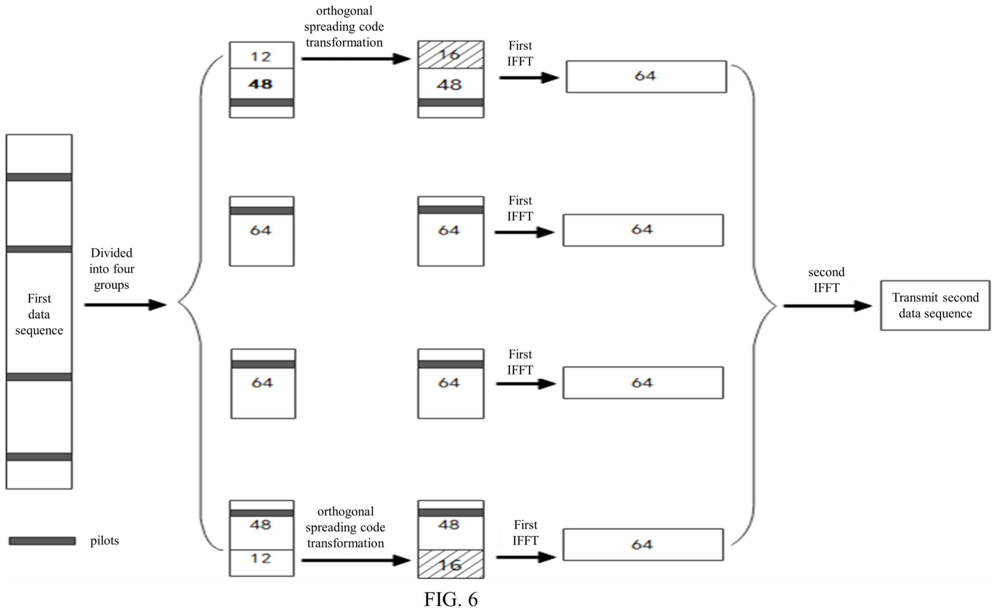

In the present example, the first data sequence to be transmitted is divided into four groups of first sequences, a first group of first sequence includes 60 pieces of data, a second group of first sequence includes 64 pieces of data, a third group of first sequence includes 64 pieces of data, and a fourth group of first sequence includes 60 pieces of data, as shown in FIG. 6.

The data in the first group of first sequence to the fourth group of first sequence is to be transmitted on the time-frequency resource blocks with a subcarrier spacing of 15 kHz.

In order to reduce out-of-band leakage, orthogonal spreading code transformation is respectively performed on the first 12 pieces of data in the data included in the first group of first sequence and the last 12 pieces of data in the data included in the fourth group of first sequence, part of the data in each group is pilots, and none of the pilots is at the position of the data to be subjected to the orthogonal spreading code transformation, and a specific process is as follows.

First spreading sequences satisfying p=3 and q=4 are selected, i.e., the three groups of first spreading sequences are [1, -1, -1, 1], [1, -1, 1, -1], and [1, 1, -1, -1], respectively.

For the first group of first sequence, the first 12 pieces of data are divided into three groups of fourth sequences, a first group of fourth sequence is [a1, a2, a3, a4], a second group of fourth sequence is [b1, b2, b3, b4], and a third group of fourth sequence is [c1, c2, c3, c4].

The pieces of data in the first group of fourth sequence [a1, a2, a3, a4] are respectively multiplied by the first group of first spreading sequence [1, -1, -1, 1], and then are spliced to obtain a first group of sixth sequence, i.e., [a1, -a1, -a1, a1, a2, -a2, - a2, a2, a3, -a3, -a3, a3, a4, -a4, -a4, a4].

The pieces of data in the second group of fourth sequence [b1, b2, b3, b4] are respectively multiplied by the second group of first spreading sequence [1, -1, 1, -1], and then are spliced to obtain a second group of sixth sequence, i.e., [b1, -b1, b1, -b1, b2, -b2, b2, -b2, b3, -b3, b3, -b3, b4, -b4, b4, -b4].

The pieces of data in the third group of fourth sequence [c1, c2, c3, c4] are respectively multiplied by the third group of first spreading sequence [1, 1, -1, -1], and then are spliced to obtain a third group of sixth sequence, i.e., [c1, c1, -c1, -c1, c2, c2, - c2, -c2, c3, c3, -c3, -c3, c4, c4, -c4, -c4].

Weight factors P(1), P(2), and P(3) are configured for the three groups of sixth sequences respectively, and values of P(1), P(2), and P(3) may be flexibly set based on application scenarios, for example, it is selected that P(1)=P(2)=P(3)=1. The three groups of sixth sequences are respectively multiplied by the corresponding weight factors and then added together to obtain a seventh sequence including 16 pieces of data, and the seventh sequence and the remaining 48 pieces of data in the first group of first sequence are spliced to obtain a first group of second sequence including 64 pieces of data.

For the fourth group of first sequence, the first spreading sequences satisfying p=3 and q=4 are also selected, that is, the three groups of first spreading sequences are [1, -1, -1, 1], [1, -1, 1, -1], and [1, 1, -1, -1], respectively.

For the fourth group of first sequence, the last 12 pieces of data are divided into three groups of fourth sequences, a first group of fourth sequence is [d1, d2, d3, d4], a second group of fourth sequence is [e1, e2, e3, e4], and a third group of fourth sequence is [f1, f2, f3, f4].

The pieces of data in the first group of fourth sequence [d1, d2, d3, d4] are respectively multiplied by the first group of first spreading sequence [1, -1, -1, 1], and then are spliced to obtain a first group of sixth sequence, i.e., [d1, -d1, -d1, d1, d2, -d2, - d2, d2, d3, -d3, -d3, d3, d4, -d4, -d4, d4].

The pieces of data in the second group of fourth sequence [e1, e2, e3, e4] are respectively multiplied by the second group of first spreading sequence [1, -1, 1, -1], and then are spliced to obtain a second group of sixth sequence, i.e., [e1, -e1, e1, -e1, e2, -e2, e2, -e2, e3, -e3, e3, -e3, e4, -e4, e4, -e4].

The pieces of data in the third group of fourth sequence [f1, f2, f3, f4] are respectively multiplied by the third group of first spreading sequence [1, 1, -1, -1], and then are spliced to obtain a third group of sixth sequence, i.e., [f1, f1, -f1, -f1, f2, f2, -f2, -f2, f3, f3, -f3, -f3, f4, f4, -f4, -f4].

The weight factors P(1), P(2), and P(3) are configured for the three groups of sixth sequences respectively, and the values of P(1), P(2), and P(3) may be flexibly set based on application scenarios, for example, it is selected that P(1) =P(2)=P(3)=1. The three groups of sixth sequences are respectively multiplied by the corresponding weight factors and then added together to obtain a seventh sequence including 16 pieces of data, and the seventh sequence and the remaining 48 pieces of data in the fourth group of first sequence are spliced to obtain a fourth group of second sequence including 64 pieces of data.

In the present example, the second group of first sequence is the same as a second group of second sequence, and the third group of first sequence is the same as a third group of second sequence.

A first inverse Fourier transform is performed on the first group of second sequence to obtain a first group of third sequence, with the number of inverse Fourier transform points being 64, and the number of pieces of data included in the first group of third sequence is 64.

A first inverse Fourier transform is performed on the second group of second sequence to obtain a second group of third sequence, with the number of inverse Fourier transform points being 64, and the number of pieces of data included in the second group of third sequence is 64.

A first inverse Fourier transform is performed on the third group of second sequence to obtain a third group of third sequence, with the number of inverse Fourier transform points being 64, and the number of pieces of data included in the third group of third sequence is 64.

A first inverse Fourier transform is performed on the fourth group of second sequence to obtain a fourth group of third sequence, with the number of inverse Fourier transform points being 64, and the number of pieces of data included in the fourth group of third sequence is 64.

A second inverse Fourier transform is performed on the four groups of third sequences to obtain a second data sequence.

The second data sequence is transmitted.

Example 6

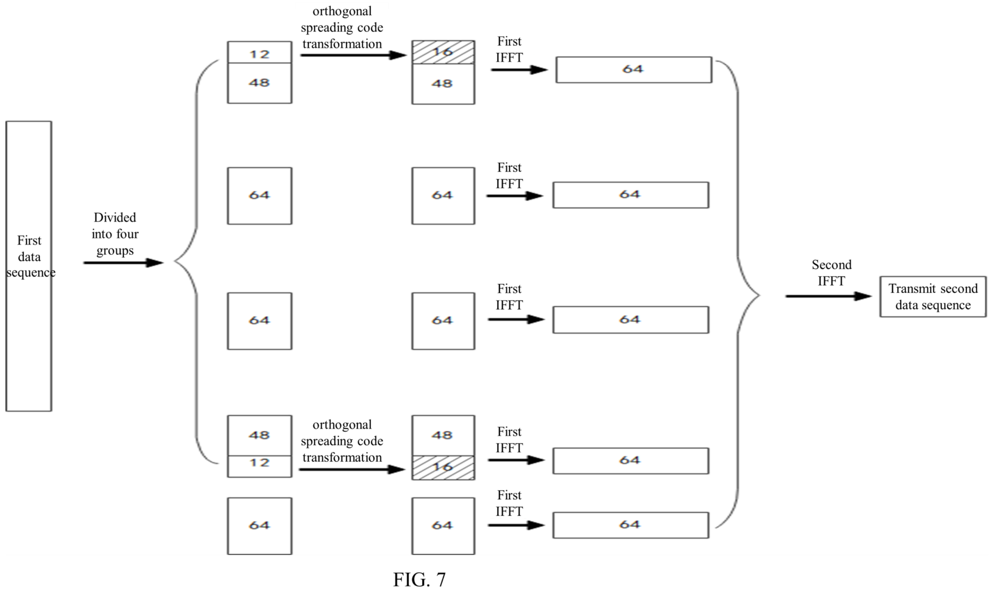

In the present example, the first data sequence to be transmitted is divided into four groups of first sequences, a first group of first sequence includes 60 pieces of data, a second group of first sequence includes 64 pieces of data, a third group of first sequence includes 64 pieces of data, and a fourth group of first sequence includes 60 pieces of data, as shown in FIG. 7.

The data in the first group of first sequence to the fourth group of first sequence is to be transmitted on the time-frequency resource blocks with a subcarrier spacing of 15 kHz.

In order to reduce out-of-band leakage, orthogonal spreading code transformation is respectively performed on the first 12 pieces of data in the data included in the first group of first sequence and the last 12 pieces of data in the data included in the fourth group of first sequence, and a specific process is as follows.

First spreading sequences satisfying p=3 and q=4 are selected, i.e., the three groups of first spreading sequences are [1, -1, -1, 1], [1, -1, 1, -1], and [1, 1, -1, -1], respectively.

For the first group of first sequence, the first 12 pieces of data are divided into three groups of fourth sequences, a first group of fourth sequence is [a1, a2, a3, a4], a second group of fourth sequence is [b1, b2, b3, b4], and a third group of fourth sequence is [c1, c2, c3, c4].

The pieces of data in the first group of fourth sequence [a1, a2, a3, a4] are respectively multiplied by the first group of first spreading sequence [1, -1, -1, 1], and then are spliced to obtain a first group of sixth sequence, i.e., [a1, -a1, -a1, a1, a2, -a2, - a2, a2, a3, -a3, -a3, a3, a4, -a4, -a4, a4].

The pieces of data in the second group of fourth sequence [b1, b2, b3, b4] are respectively multiplied by the second group of first spreading sequence [1, -1, 1, -1], and then are spliced to obtain a second group of sixth sequence, i.e., [b1, -b1, b1, -b1, b2, -b2, b2, -b2, b3, -b3, b3, -b3, b4, -b4, b4, -b4].

The pieces of data in the third group of fourth sequence [c1, c2, c3, c4] are respectively multiplied by the third group of first spreading sequence [1, 1, -1, -1], and then are spliced to obtain a third group of sixth sequence, i.e., [c1, c1, -c1, -c1, c2, c2, - c2, -c2, c3, c3, -c3, -c3, c4, c4, -c4, -c4].

Weight factors P(1), P(2), and P(3) are configured for the three groups of sixth sequences respectively, and values of P(1), P(2), and P(3) may be flexibly set based on application scenarios, for example, it is selected that P(1)=P(2) =P(3)=1. The three groups of sixth sequences are respectively multiplied by the corresponding weight factors and then added together to obtain a seventh sequence including 16 pieces of data, and the seventh sequence and the remaining 48 pieces of data in the first group of first sequence are spliced to obtain a first group of second sequence including 64 pieces of data.

For the fourth group of first sequence, the first spreading sequences satisfying p=3 and q=4 are also selected, that is, the three groups of first spreading sequences are [1, -1, -1, 1], [1, -1, 1, -1], and [1, 1, -1, -1], respectively.

For the fourth group of first sequence, the last 12 pieces of data are divided into three groups of fourth sequences, a first group of fourth sequence is [d1, d2, d3, d4], a second group of fourth sequence is [e1, e2, e3, e4], and a third group of fourth sequence is [f1, f2, f3, f4].

The pieces of data in the first group of fourth sequence [d1, d2, d3, d4] are respectively multiplied by the first group of first spreading sequence [1, -1, -1, 1], and then are spliced to obtain a first group of sixth sequence, i.e., [d1, -d1, -d1, d1, d2, -d2, - d2, d2, d3, -d3, -d3, d3, d4, -d4, -d4, d4].

The pieces of data in the second group of fourth sequence [e1, e2, e3, e4] are respectively multiplied by the second group of first spreading sequence [1, -1, 1, -1], and then are spliced to obtain a second group of sixth sequence, i.e., [e1, -e1, e1, -e1, e2, -e2, e2, -e2, e3, -e3, e3, -e3, e4, -e4, e4, -e4].

The pieces of data in the third group of fourth sequence [f1, f2, f3, f4] are respectively multiplied by the third group of first spreading sequence [1, 1, -1, -1], and then are spliced to obtain a third group of sixth sequence, i.e., [f1, f1, -f1, -f1, f2, f2, -f2, -f2, f3, f3, -f3, -f3, f4, f4, -f4, -f4].

The weight factors P(1), P(2), and P(3) are configured for the three groups of sixth sequences respectively, and the values of P(1), P(2), and P(3) may be flexibly set based on application scenarios, for example, it is selected that P(1) =P(2)=P(3)=1. The three groups of sixth sequences are respectively multiplied by the corresponding weight factors and then added together to obtain a seventh sequence including 16 pieces of data, and the seventh sequence and the remaining 48 pieces of data in the fourth group of first sequence are spliced to obtain a fourth group of second sequence including 64 pieces of data.

In the present example, the second group of first sequence is the same as a second group of second sequence, and the third group of first sequence is the same as a third group of second sequence.

A first inverse Fourier transform is performed on the first group of second sequence to obtain a first group of third sequence, with the number of inverse Fourier transform points being 64, and the number of pieces of data included in the first group of third sequence is 64.

A first inverse Fourier transform is performed on the second group of second sequence to obtain a second group of third sequence, with the number of inverse Fourier transform points being 64, and the number of pieces of data included in the second group of third sequence is 64.

A first inverse Fourier transform is performed on the third group of second sequence to obtain a third group of third sequence, with the number of inverse Fourier transform points being 64, and the number of pieces of data included in the third group of third sequence is 64.

A first inverse Fourier transform is performed on the fourth group of second sequence to obtain a fourth group of third sequence, with the number of inverse Fourier transform points being 64, and the number of pieces of data included in the fourth group of third sequence is 64.

A second inverse Fourier transform is performed on the four groups of third sequences and another data sequence to obtain a second data sequence, and the another data sequence is a data sequence obtained by performing first inverse Fourier transform on a data sequence except the first data sequence.

The second data sequence is transmitted.

Example 7

In the present example, the first data sequence to be transmitted is divided into four groups of first sequences, a first group of first sequence includes 60 pieces of data, a second group of first sequence includes 64 pieces of data, a third group of first sequence includes 64 pieces of data, and a fourth group of first sequence includes 60 pieces of data, as shown in FIG. 8.

The data in the first group of first sequence to the fourth group of first sequence is to be transmitted on the time-frequency resource blocks with a subcarrier spacing of 15 kHz.

In order to reduce out-of-band leakage, orthogonal spreading code transformation is respectively performed on the first 12 pieces of data in the data included in the first group of first sequence and the last 12 pieces of data in the data included in the fourth group of first sequence, and a specific process is as follows.

First spreading sequences satisfying p=3 and q=4 are selected, i.e., the three groups of first spreading sequences are [1, -1, -1, 1], [1, -1, 1, -1], and [1, 1, -1, -1], respectively.

For the first group of first sequence, the first 12 pieces of data are divided into three groups of fourth sequences, a first group of fourth sequence is [a1, a2, a3, a4], a second group of fourth sequence is [b1, b2, b3, b4], and a third group of fourth sequence is [c1, c2, c3, c4].

The pieces of data in the first group of fourth sequence [a1, a2, a3, a4] are respectively multiplied by the first group of first spreading sequence [1, -1, -1, 1], and then are spliced to obtain a first group of sixth sequence, i.e., [a1, -a1, -a1, a1, a2, -a2, - a2, a2, a3, -a3, -a3, a3, a4, -a4, -a4, a4].

The pieces of data in the second group of fourth sequence [b1, b2, b3, b4] are respectively multiplied by the second group of first spreading sequence [1, -1, 1, -1], and then are spliced to obtain a second group of sixth sequence, i.e.,

[b1, -b1, b1, -b1, b2, -b2, b2, -b2, b3, -b3, b3, -b3, b4, -b4, b4, -b4].

The pieces of data in the third group of fourth sequence [c1, c2, c3, c4] are respectively multiplied by the third group of first spreading sequence [1, 1, -1, -1], and then are spliced to obtain a third group of sixth sequence, i.e., [c1, c1, -c1, -c1, c2, c2, - c2, -c2, c3, c3, -c3, -c3, c4, c4, -c4, -c4].

Weight factors P(1), P(2), and P(3) are configured for the three groups of sixth sequences respectively, and values of P(1), P(2), and P(3) may be flexibly set based on application scenarios, for example, it is selected that P(1)=P(2)=P(3)=1. The three groups of sixth sequences are respectively multiplied by the corresponding weight factors and then added together to obtain a seventh sequence including 16 pieces of data, and the seventh sequence and the remaining 48 pieces of data in the first group of first sequence are spliced to obtain a first group of second sequence including 64 pieces of data.

For the fourth group of first sequence, the first spreading sequences satisfying p=3 and q=4 are also selected, that is, the three groups of first spreading sequences are [1, -1, -1, 1], [1, -1, 1, -1], and [1, 1, -1, -1], respectively.

For the fourth group of first sequence, the last 12 pieces of data are divided into three groups of fourth sequences, a first group of fourth sequence is [d1, d2, d3, d4], a second group of fourth sequence is [e1, e2, e3, e4], and a third group of fourth sequence is [f1, f2, f3, f4].

The pieces of data in the first group of fourth sequence [d1, d2, d3, d4] are respectively multiplied by the first group of first spreading sequence [1, -1, -1, 1], and then are spliced to obtain a first group of sixth sequence, i.e., [d1, -d1, -d1, d1, d2, -d2, - d2, d2, d3, -d3, -d3, d3, d4, -d4, -d4, d4].

The pieces of data in the second group of fourth sequence [e1, e2, e3, e4] are respectively multiplied by the second group of first spreading sequence [1, -1, 1, -1], and then are spliced to obtain a second group of sixth sequence, i.e., [e1, -e1, e1, -e1, e2, -e2, e2, -e2, e3, -e3, e3, -e3, e4, -e4, e4, -e4].

The pieces of data in the third group of fourth sequence [f1, f2, f3, f4] are respectively multiplied by the third group of first spreading sequence [1, 1, -1, -1], and then are spliced to obtain a third group of sixth sequence, i.e., [f1, f1, -f1, -f1, f2, f2, -f2, -f2, f3, f3, -f3, -f3, f4, f4, -f4, -f4].

The weight factors P(1), P(2), and P(3) are configured for the three groups of sixth sequences respectively, and the values of P(1), P(2), and P(3) may be flexibly set based on application scenarios, for example, it is selected that P(1)=P(2)=P(3)=1. The three groups of sixth sequences are respectively multiplied by the corresponding weight factors and then added together to obtain a seventh sequence including 16 pieces of data, and the seventh sequence and the remaining 48 pieces of data in the fourth group of first sequence are spliced to obtain a fourth group of second sequence including 64 pieces of data.

In the present example, the second group of first sequence is the same as a second group of second sequence, and the third group of first sequence is the same as a third group of second sequence.

A first inverse Fourier transform is performed on the first group of second sequence to obtain a first group of third sequence, with the number of inverse Fourier transform points being 64, and the number of pieces of data included in the first group of third sequence is 64.

A first inverse Fourier transform is performed on the second group of second sequence to obtain a second group of third sequence, with the number of inverse Fourier transform points being 64, and the number of pieces of data included in the second group of third sequence is 64.

A first inverse Fourier transform is performed on the third group of second sequence to obtain a third group of third sequence, with the number of inverse Fourier transform points being 64, and the number of pieces of data included in the third group of third sequence is 64.

A first inverse Fourier transform is performed on the fourth group of second sequence to obtain a fourth group of third sequence, with the number of inverse Fourier transform points being 64, and the number of pieces of data included in the fourth group of third sequence is 64.

A second inverse Fourier transform is performed on the four groups of third sequences to obtain a second data sequence. Specifically, the four groups of third sequences are arranged in four rows respectively, four pieces of data are extracted by column, 16-point oversampling inverse Fourier transform is performed on every four pieces of data extracted to obtain one subsymbol, that is, every four pieces of data extracted by column correspond to one subsymbol after being subjected to the oversampling inverse Fourier transform, and as shown in FIG. 8, the four pieces of data extracted for a first time correspond to a subsymbol 1, the four pieces of data extracted for a second time correspond to a subsymbol 2, ..., and the four pieces of data extracted for a 128th time correspond to a subsymbol 128. Each subsymbol is then repeatedly expanded by four times, as shown in FIG. 8, the subsymbol 1 is expanded into four subsymbols 1 to obtain a first group of tenth sequence, the subsymbol 2 is expanded into four subsymbols 2 to obtain a second group of tenth sequence, ..., and the subsymbol 128 is expanded into four subsymbols 128 to obtain a 128th group of tenth sequence.

The 128 groups of tenth sequences are arranged into 128 rows in a staggered manner, with a staggered interval between two first pieces of data in two adjacent rows being equal to half a length of the subsymbol; and the pieces of data in each column in the 128 rows of data are added together to obtain the second data sequence.

The second data sequence is transmitted.

Example 8

In the present example, after the second data sequence is obtained based on the above examples, the second data sequence is filtered, Digital-to-Analog Conversion (DAC) and radio frequency processing are performed on the filtered second data sequence, and the second data sequence subjected to the DAC and the radio frequency processing is transmitted on the N time-frequency resource blocks.

The filtering is single-phase filtering or polyphase filtering, and the polyphase filtering is to filter each of new N groups of data sequences.

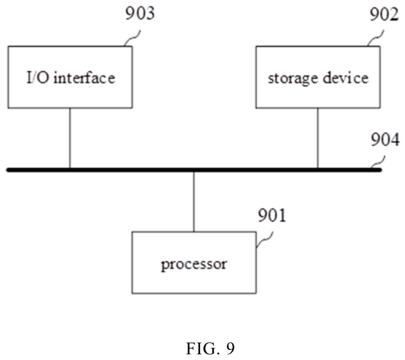

In a second aspect, referring to FIG. 9, an embodiment of the present disclosure provides an electronic device, including: at least one processor 901; and a storage device 902 having stored thereon at least one program which, when executed by the at least one processor 901, implements the data transmission method described above.

In some exemplary implementations, the electronic device further includes: at least one Input/output (I/O) interface 903 connected between the at least one processor 901 and the storage device 902 and configured to enable information interaction between the at least one processor 901 and the storage device 902.

The processor 901 is a device having a data processing capability, and includes, but is not limited to, a Central Processing Unit (CPU); the storage device 902 is a device having a data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the I/O interface (read/write interface) 903 is connected between the processor 901 and the storage device 902, is capable of enabling the information interaction between the processor 901 and the storage device 902, and includes, but is not limited to, a data bus (Bus).

In some embodiments, the processor 901, the storage device 902, and the I/O interface 903 are connected to each other through a bus 904, and then are connected to other components of a computing device.

In a third aspect, an embodiment of the present disclosure provides a computer-readable medium having stored thereon a computer program which, when executed by a processor, implements the data transmission method described above.

It should be understood by those of ordinary skill in the art that all or some of the operations in the method, the functional modules/units in the systems and the devices disclosed above may be implemented as software, firmware, hardware, or suitable combinations thereof. If implemented as hardware, the division between the functional modules/units stated above does not necessarily correspond to the division of physical components; for example, one physical component may have a plurality of functions, or one function or operation may be performed through cooperation of several physical components. Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules or other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carriers or other transmission mechanisms, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that the features, characteristics and/or elements described in connection with a particular embodiment may be used alone or in combination with the features, characteristics and/or elements described in connection with other embodiments. Therefore, it should be understood by those of ordinary skill in the art that various changes in forms and details may be made without departing from the scope of the appended claims of the present disclosure.

**Claims**

**1.** A data transmission method, comprising:

performing orthogonal spreading code transformation on data included in an edge group of first sequence among N groups of first sequences obtained by dividing a first data sequence to be transmitted, to obtain N groups of second sequences, wherein N is an integer greater than or equal to 2;

performing a first inverse Fourier transform on the N groups of second sequences to obtain N groups of third sequences;

performing a second inverse Fourier transform on the N groups of third sequences to obtain a second data sequence; and

transmitting the second data sequence.

2. The data transmission method of claim 1, wherein after performing the second inverse Fourier transform on the N groups of third sequences to obtain the second data sequence and before transmitting the second data sequence, the method further comprises:

filtering the second data sequence to obtain filtered second data sequence,

transmitting the second data sequence comprises: transmitting the filtered second data sequence.

3. The data transmission method of claim 1 or 2, wherein performing orthogonal spreading code transformation on the data included in the edge group of first sequence among the N groups of first sequences obtained by dividing the first data sequence to be transmitted to obtain the N groups of second sequences comprises:

performing orthogonal spreading code transformation on data to be transmitted in the data included in the edge group of first sequence to obtain a corresponding second sequence, wherein the data to be transmitted is fore part data in the data included in the edge group of first sequence, or rear part data in the data included in the edge group of first sequence, or all the data included in the edge group of first sequence.

4. The data transmission method of claim 3, wherein the data to be transmitted does not comprise reference signal data.

5. The data transmission method of claim 3, wherein the data to be transmitted comprises h pieces of data, and data obtained by performing orthogonal spreading code transformation on the data to be transmitted comprises hq/p pieces of data,

wherein h is an integer greater than or equal to 1, p is a total number of groups of first spreading sequences for the orthogonal spreading code transformation, and q is a length of the first spreading sequence.

6. The data transmission method of claim 5, wherein q is an even number, every two consecutive pieces of data in each of the first spreading sequences are in one group, and a phase difference between the two pieces of data in the group is $\pi$; or a phase difference between adjacent groups is $\pi$.

7. The data transmission method of claim 3, wherein performing orthogonal spreading code transformation on the data to be transmitted in the data included in the edge group of first sequence to obtain the second sequence comprises:

expanding p groups of fourth sequences obtained by dividing the data to be transmitted into p groups of fifth sequences each with a length of hq/p, wherein h is an integer greater than or equal to 1, p is a total number of groups of first spreading sequences for the orthogonal spreading code transformation, and q is a length of the first spreading sequence;

expanding p groups of first spreading sequences each with a length of q into p groups of second spreading sequences each with a length of hq/p;

multiplying data in a $k^{th}$ group of fifth sequence and corresponding data in a $k^{th}$ group of second spreading sequence to obtain a $k^{th}$ group of sixth sequence, wherein k is an integer greater than or equal to 1 and less than or equal to p;

weighting and adding p groups of sixth sequences to obtain a seventh sequence; and

splicing the seventh sequence and other data included in the edge group of first sequence except the data to be transmitted to obtain the second sequence.

8. The data transmission method of claim 3, wherein performing orthogonal spreading code transformation on the data to be transmitted in the data included in the edge group of first sequence to obtain the second sequence comprises:

respectively multiplying each piece of data in a $k^{th}$ group of fourth sequence among p groups of fourth sequences obtained by dividing the data to be transmitted and each piece of data in a $k^{th}$ group of first spreading sequence among p groups of first spreading sequences each with a length of q to obtain a $k^{th}$ group of sixth sequence, wherein p is a total number of groups of first spreading sequences for the orthogonal spreading code transformation, q is a length of the first spreading sequence, and k is an integer greater than or equal to 1 and less than or equal to p;

weighting and adding p groups of sixth sequences to obtain a seventh sequence; and

splicing the seventh sequence and other data included in the edge group of first sequence except the data to be transmitted to obtain the second sequence.

9. The data transmission method of claim 1 or 2, wherein performing the first inverse Fourier transform on the N groups of second sequences to obtain the N groups of third sequences comprises: performing an M-fold oversampling first inverse Fourier transform on the N groups of second sequences to obtain the N groups of third sequences, wherein M is an integer greater than or equal to 2,

before performing the second inverse Fourier transform on the N groups of third sequences to obtain the second data sequence, the method further comprises: respectively multiplying each group of third sequence among the N groups of third sequences and a corresponding coefficient sequence to obtain N groups of eighth sequences, performing the second inverse Fourier transform on the N groups of third sequences to obtain the second data sequence comprises: performing the second inverse Fourier transform on the N groups of eighth sequences to obtain the second data sequence.

10. The data transmission method of claim 1 or 2, wherein performing the second inverse Fourier transform on the N groups of third sequences to obtain the second data sequence comprises:

performing the second inverse Fourier transform on the N groups of third sequences and another data sequence to obtain the second data sequence.

11. The data transmission method of claim 1 or 2, wherein performing the second inverse Fourier transform on the N groups of third sequences to obtain the second data sequence comprises:

performing the second inverse Fourier transform on N pieces of data formed by a $j^{th}$ piece of data from each of the N groups of third sequences to obtain a $j^{th}$ group of ninth sequence, wherein j is an integer greater than or equal to 1 and less than or equal to B, and B is a total number of pieces of data included in each group of third sequence; expanding B groups of ninth sequences into B groups of tenth sequences, wherein a total number of pieces of data included in the tenth sequences is D times a total number of pieces of data included in the ninth sequences, wherein D is an integer greater than or equal to 2; and splicing the B groups of tenth sequences into the second data sequence.

12. The data transmission method of claim 11, wherein after expanding the B groups of ninth sequences into the B groups of tenth sequences and before splicing the B groups of tenth sequences into the second data sequence, the method further comprises: performing a windowing operation on the B groups of tenth sequences,

splicing the B groups of tenth sequences into the second data sequence comprises: splicing the B groups of tenth sequences subjected to the windowing operation into the second data sequence.

13. The data transmission method of claim 1 or 2, wherein the edge group of first sequence comprises: a first group of first sequence; or an $N^{th}$ group of first sequence; or the first group of first sequence and the $N^{th}$ group of first sequence.

14. The data transmission method of claim 1 or 2, wherein a total number of pieces of data included in each non-edge group of first sequence is K, wherein K is an integer greater than or equal to 1;

a total number of pieces of data included in each edge group of first sequence is less than K; and a total number of pieces of data included in the second sequence corresponding to each edge group of first sequence is K.

15. The data transmission method of claim 14, wherein K is 2 to the power i, wherein i is an integer greater than or equal to 1.

16. The data transmission method of claim 1 or 2, wherein the N groups of first sequences correspond to N subbands, and a total number of subcarriers included in the subband corresponding to each edge group of first sequence is the same as a total number of subcarriers included in the subband corresponding to each non-edge group of first sequence, transmitting the second data sequence comprises: transmitting the second data sequence on the N subbands.

17. The data transmission method of claim 1 or 2, wherein the N groups of first sequences correspond to N time-frequency resource blocks, and a total number of subcarriers included in the time-frequency resource block corresponding to each edge group of first sequence is the same as a total number of subcarriers included in the time-frequency resource block corresponding to each non-edge group of first sequence,
transmitting the second data sequence comprises: transmitting the second data sequence on the N time-frequency resource blocks.

18. The data transmission method of claim 17, wherein a total number of pieces of data included in each group of third sequence is the same as the number of the subcarriers included in the time-frequency resource block corresponding to each group of first sequence.

19. The data transmission method of claim 17, wherein the N time-frequency resource blocks are part or all of time-frequency resource blocks within a channel bandwidth, and the first data sequence to be transmitted is part or all of data to be transmitted within the channel bandwidth.

20. The data transmission method of claim 1 or 2, wherein a total number of inverse Fourier transform points for the first inverse Fourier transform performed on an $n^{th}$ group of second sequence is the same as a total number of pieces of data included in an $n^{th}$ group of third sequence, wherein n is an integer greater than or equal to 1 and less than or equal to N.

21. The data transmission method of claim 1 or 2, wherein a total number of inverse Fourier transform points for the first inverse Fourier transform performed on each of the N groups of second sequences is the same.

22. The data transmission method of claim 1 or 2, wherein a zero-frequency position for the first inverse Fourier transform performed on an $n^{th}$ group of second sequence is within a frequency range of a time-frequency resource block corresponding to an $n^{th}$ group of first sequence, wherein n is an integer greater than or equal to 1 and less than or equal to N; and
zero-frequency positions for the first inverse Fourier transform performed on different groups of second sequences are different.

23. The data transmission method of claim 1 or 2, wherein a zero-frequency position for the first inverse Fourier transform performed on an $n^{th}$ group of second sequence is in one of subcarriers included in a time-frequency resource block corresponding to an $n^{th}$ group of first sequence, wherein n is an integer greater than or equal to 1 and less than or equal to N.

24. The data transmission method of claim 1 or 2, wherein a total number of inverse Fourier transform points for the second inverse Fourier transform performed on the N groups of third sequences is greater than N.

25. An electronic device, comprising:

at least one processor; and
a storage device having stored thereon at least one program, the at least one program, executed by the at least one processor, causes the at least one processor to implement the data transmission method of any one of claims 1 to 24.

26. A computer-readable medium having stored thereon a computer program, the computer program, executed by a processor, causes the processor to implement the data transmission method of any one of claims 1 to 24.

perform orthogonal spreading code transformation on data included in an edge group of first sequence among N groups of first sequences obtained by dividing a first data sequence to be transmitted, to obtain N groups of second sequences, with N being an integer greater than or equal to 2

perform a first inverse Fourier transform on the N groups of second sequences to obtain N groups of third sequences

perform a second inverse Fourier transform on the N groups of third sequences to obtain a second data sequence

transmit the second data sequence

FIG. 1

FIG. 2

FIG. 3

EP 4 683 276 A1

FIG. 4

FIG. 5

FIG. 6

FIG. 7

FIG. 8

FIG. 9

## INTERNATIONAL SEARCH REPORT

| International application No. |
| --- |
| **PCT/CN2024/070810** |

### A. CLASSIFICATION OF SUBJECT MATTER

H04L27/26(2006.01)i

According to International Patent Classification (IPC) or to both national classification and IPC

### B. FIELDS SEARCHED

Minimum documentation searched (classification system followed by classification symbols)

IPC:H04L27/-; H04L5/-

Documentation searched other than minimum documentation to the extent that such documents are included in the fields searched

Electronic data base consulted during the international search (name of data base and, where practicable, search terms used)

CNABS, CNTXT, CNKI, 万方, WANFANG: 序列, 信号, 数据, 边缘, 端, 开始, 结束, 头, 尾, 扩展, 变换, 保护间隔, 正交, 抑制, 降低, 干扰, 频谱, 带外, 泄漏, 泄露: VEN, ENTXT, 3GPP: sequence, signal, data, edge, start, end, head, tail, spread, transform, orthogonal, inhibit, reduce, interference, spectrum, leakage, guard, interval

### C. DOCUMENTS CONSIDERED TO BE RELEVANT

| Category* | Citation of document, with indication, where appropriate, of the relevant passages | Relevant to claim No. |
| --- | --- | --- |
| Y | CN 115622854 A (ZTE CORP.) 17 January 2023 (2023-01-17) description, paragraphs [11]-[14] | 1-26 |
| Y | CN 111886805 A (ZTE CORP.) 03 November 2020 (2020-11-03) description, paragraphs [25]-[26] | 1-26 |
| A | CN 109873782 A (ZTE CORP.) 11 June 2019 (2019-06-11) entire document | 1-26 |
| A | CN 115174328 A (HUAWEI TECHNOLOGIES CO., LTD.) 11 October 2022 (2022-10-11) entire document | 1-26 |

☐ Further documents are listed in the continuation of Box C.　☑ See patent family annex.

| | | |
| --- | --- | --- |
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **03 April 2024** | **03 April 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/070810**

| Patent document cited in search report | | | Publication date (day/month/year) | Patent family member(s) | | | Publication date (day/month/year) |
|---|---|---|---|---|---|---|---|
| CN | 115622854 | A | 17 January 2023 | WO | 2023284752 | A1 | 19 January 2023 |
| CN | 111886805 | A | 03 November 2020 | CA | 3125352 | A1 | 12 September 2019 |
| | | | | WO | 2019169529 | A1 | 12 September 2019 |
| | | | | US | 2020396032 | A1 | 17 December 2020 |
| | | | | SG | 11202106944 | A1 | 29 July 2021 |
| | | | | CN | 111886805 | B | 25 January 2022 |
| | | | | CN | 114362875 | A | 15 April 2022 |
| | | | | US | 11418299 | B2 | 16 August 2022 |
| | | | | CA | 3125352 | C | 24 October 2023 |
| CN | 109873782 | A | 11 June 2019 | US | 2020287765 | A1 | 10 September 2020 |
| | | | | US | 11418377 | B2 | 16 August 2022 |
| | | | | EP | 3720076 | A1 | 07 October 2020 |
| | | | | EP | 3720076 | A4 | 04 August 2021 |
| | | | | WO | 2019105053 | A1 | 06 June 2019 |
| | | | | CN | 109873782 | B | 25 February 2022 |
| CN | 115174328 | A | 11 October 2022 | WO | 2022206590 | A1 | 06 October 2022 |
| | | | | CN | 115174328 | B | 08 December 2023 |

Form PCT/ISA/210 (patent family annex) (July 2022)